# EUROPÄISCHE PATENTSCHRIFT

(11) **EP 2 145 909 B1**
(45) Veröffentlichungstag und Bekanntmachung des Hinweises auf die Patenterteilung: **22.02.2012**
(21) Anmeldenummer: 08160614.7
(22) Anmeldetag: 17.07.2008
(51) Int. Cl.: C08G 65/00

(54) **Verfahren zur Herstellung geblockter Alkohole**
Method for producing blocked alcohols
Procédé de fabrication d'alcools bloqués

(43) Veröffentlichungstag der Anmeldung: 20.01.2010
(73) Patentinhaber: Sika Technology AG, 6340 Baar (CH)
(72) Erfinder: Russo, Jean-Luca, 8108 Dällikon (CH); Tobler, David, 8406 Winterthur (CH); Burckhardt, Urs, 8049 Zürich (CH); Bütikofer, Pierre-André, 8304 Wallisellen (CH)
(74) Vertreter: Sika Patent Attorneys

(56) Entgegenhaltungen:
- EP-A- 0 209 823
- EP-A- 1 849 845
- EP-A- 1 918 314
- DE-A1- 19 613 204
- US-A- 4 011 251

## Beschreibung

### Technisches Gebiet

Die Erfindung betrifft ein Verfahren zur Herstellung von abgeblockten Alkoholen sowie deren Verwendung als Weichmacher, als Schmelzkomponente oder als Thixotropierungsmittel.

### Stand der Technik

Polymere Alkohole, wie beispielsweise Polyether- oder Polyesteralkohole, mit abgeblockten Hydroxylgruppen ("abgeblockte Alkohole") finden breite Anwendung in der Kunststofftechnologie, so beispielsweise als Weichmacher oder als Schmelzkomponente im Bereich der Kleb- und Dichtstoffe, Beschichtungen oder Folien.

Allgemein bekannte Herstellungsverfahren für derartige abgeblockte Alkohole verlaufen über eine Veresterungsreaktion eines polymeren Alkohols mit Carbonsäuren, Carbonsäurechloriden oder Carbonsäureanhydriden. Die Nachteile dieser Herstellungsverfahren bestehen darin, dass die Veresterungsreaktion an polymeren Alkoholen nur langsam und erschwert abläuft. Das führt dazu, dass bei einem unvollständigen Umsatz Rückstände des Veresterungsreagenz sowie nicht umgesetzte Hydroxylgruppen im hergestellten Erzeugnis übrig bleiben und diesem unerwünschte Eigenschaften verleihen können. Hinzu kommt, dass diese unerwünschten Rückstände oftmals flüchtig sind und bei der Verwendung des abgeblockten Alkohols in einem Kunststoff mit der Zeit migrieren und aus dem Kunststoff austreten können. Dies führt dann zu Volumenschwund des Kunststoffs oder zu Beeinträchtigungen in der Haftung, insbesondere bei Kleb- und Dichtstoffen. Weiterhin kann das Austreten dieser Rückstände zu Geruchsbelastungen und Einbussen bei der Ästhetik führen.

### Darstellung der Erfindung

Aufgabe der vorliegenden Erfindung ist es daher, ein Verfahren zur Herstellung von abgeblockten polymeren Alkoholen bereitzustellen, welches schnell und effizient abläuft und bei welchem keine oder nur vernachlässigbar wenig flüchtige Bestandteile im hergestellten Erzeugnis zurückbleiben.

Überraschenderweise wurde nun gefunden, dass ein Verfahren gemäss Anspruch 1 diese Aufgabe löst.

Durch die Umsetzung der polymeren Alkohole mit spezifischen Enolestern ist es möglich, in schneller und effizienter Weise abgeblockte Alkohole herzustellen, welche keine oder nahezu keine unerwünschten flüchtigen Bestandteile aufweisen.

Der Einsatz der so abgeblockten Alkohole ist sehr vielfältig und reicht vom Weichmacher bis zur Schmelzkomponente oder Thixotropierungsmittel in unterschiedlichen Bereichen der Kunststofftechnologie. Dabei weisen diese abgeblockten Alkohole den gemeinsamen Vorteil auf, dass sie keine oder nur vernachlässigbar wenig unerwünschte flüchtige Rückstände enthalten, welche von nicht oder unvollständig umgesetzten Veresterungsreagenzien herstammen.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der vorliegenden Erfindung ist in einem ersten Aspekt ein Verfahren zur Herstellung einer Verbindung der Formel (I).

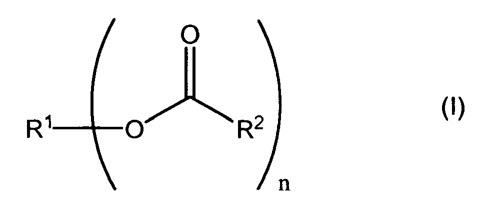

Dabei steht der Rest R¹ für den n-wertigen Rest eines polymeren Alkohols **PA** nach Entfernung von n Hydroxylgruppen.

Der Rest R² steht unabhängig voneinander für einen linearen oder verzweigten, einwertigen Kohlenwasserstoffrest mit 1 bis 20 C-Atomen, welcher gegebenenfalls ein oder mehrere Heteroatome, insbesondere Sauerstoffatome in Form von Ether- und/oder Estergruppen, und gegebenenfalls cycloaliphatische und/oder aromatische Anteile aufweist.

Der Index n steht für einen Wert von 1 bis 4.

Im erfindungsgemässen Verfahren werden n Hydroxylgruppen des polymeren Alkohols **PA** in Gegenwart eines Säurekatalysators mit einer Verbindung der Formel (II) umgesetzt.

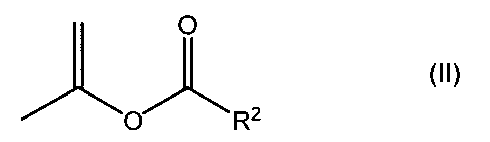

Der Rest R² ist bereits vorhergehend beschrieben worden. Insbesondere steht der Rest R² für eine Methyl- oder für eine Ethyl- oder für eine Isopropylgruppe, insbesondere für eine Methylgruppe.

Der Index n steht bevorzugt für einen Wert von 2.

Mit "Poly" beginnende Substanznamen wie Polyol oder Polyisocyanat bezeichnen im vorliegenden Dokument Substanzen, die formal zwei oder mehr der in ihrem Namen vorkommenden funktionellen Gruppen pro Molekül enthalten.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst weiterhin auch so genannte Prepolymere, das heisst reaktive oligomere Voraddukte, deren funktionelle Gruppen am Aufbau von Makromolekülen beteiligt sind.

Der Begriff "polymerer Alkohol" umfasst im vorliegenden Dokument ein beliebiges Polymer gemäss vorhergehender Definition, welches mindestens eine Hydroxylgruppe aufweist. Dem entsprechend umfasst der Begriff "polymeres Polyol" ein beliebiges Polymer, welches zwei oder mehr Hydroxylgruppen aufweist.

Der Begriff "Polyurethanpolymer" umfasst sämtliche Polymere, welche nach dem so genannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyhamstoffe, Polyester-Polyhamstoffe, Polyisocyanurate und Polycarbodiimide.

Im vorliegenden Dokument bezeichnen die Terme "Silan" bzw. "Organosilan" Verbindungen, welche einerseits mindestens eine, üblicherweise zwei oder drei, über Si-O-Bindungen, direkt an das Siliciumatom gebundene Alkoxygruppen oder Acyloxygruppen aufweisen, und andererseits mindestens einen, über eine Si-C-Bindung, direkt an das Siliciumatom gebundenen organischen Rest aufweisen. Derartige Silane sind dem Fachmann auch als Organoalkoxysilane bzw. Organoacyloxysilane bekannt.

Entsprechend bezeichnet der Begriff "Silangruppe" die an den, über die Si-C-Bindung gebundenen, organischen Rest des Silans gebundene siliciumhaltige Gruppe. Die Silane, beziehungsweise deren Silangruppen, haben die Eigenschaft, bei Kontakt mit Feuchtigkeit zu hydrolysieren. Dabei bilden sich Organosilanole, das heisst siliciumorganische Verbindungen enthaltend eine oder mehrere Silanolgruppen (Si-OH-Gruppen) und, durch nachfolgende Kondensationsreaktionen, Organosiloxane, das heisst siliciumorganische Verbindungen enthaltend eine oder mehrere Siloxangruppen (Si-O-Si-Gruppen).

Der Begriff "silanfunktionell" bezeichnet Verbindungen, die Silangruppen aufweisen. "Silanfunktionelle Polymere" sind demnach Polymere, welche mindestens eine Silangruppe aufweisen.

Als "Aminosilane" bzw. "Mercaptosilane" oder "Isocyanatosilane" werden Organosilane bezeichnet, deren organischer Rest eine Aminogruppe bzw. eine Mercaptogruppe oder eine Isocyanatgruppe aufweist. Als "primäre Aminosilane" werden Aminosilane bezeichnet, welche eine primäre Aminogruppe aufweisen, also eine NH₂-Gruppe, die an einen organischen Rest gebunden ist. Als "sekundäre Aminosilane" werden Aminosilane bezeichnet, welche eine sekundäre Aminogruppe aufweisen, also eine NH-Gruppe, die an zwei organische Reste gebunden ist.

Unter der "Molekulargewicht" versteht man im vorliegenden Dokument stets das Molekulargewichtsmittel Mₙ (Zahlenmittel).

In einem erfindungsgemässen Verfahren ist der polymere Alkohol **PA** insbesondere ein Polyetheralkohol, ein Polyesteralkohol oder ein Polyetherpolyesteralkohol, bevorzugt ein Polyetherpolyol, ein Polyesterpolyol oder ein Polyetherpolyesterpolyol.

Als Polyetherpolyole, auch Polyoxyalkylenpolyole oder Oligoetherole genannt, sind insbesondere jene geeignet, welche Polymerisationsprodukte von Ethylenoxid, 1,2-Propylenoxid, 1,2- oder 2,3-Butylenoxid, Oxetan, Tetrahydrofuran oder Mischungen davon sind, gegebenenfalls polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der genannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliäquivalent Ungesättigtheit pro Gramm Polyol (mEq/g)), hergestellt beispielsweise mit Hilfe von so genannten Double Metal Cyanide Komplex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten.

Besonders geeignet sind Polyoxyethylenpolyole und Polyoxypropylenpolyole, insbesondere Polyoxyethylendiole, Polyoxypropylendiole, Polyoxyethylentriole und Polyoxypropylentriole.

Ebenfalls besonders geeignet sind so genannte Ethylenoxidterminierte ("EO-endcapped", ethylene oxide-endcapped) Polyoxypropylenpolyole. Letztere sind spezielle Polyoxypropylenpolyoxyethylenpolyole, die beispielsweise dadurch erhalten werden, dass reine Polyoxypropylenpolyole, insbesondere Polyoxypropylendiole und -triole, nach Abschluss der Polypropoxylierungsreaktion mit Ethylenoxid weiter alkoxyliert werden und dadurch primäre Hydroxylgruppen aufweisen. Bevorzugt sind in diesem Fall Polyoxypropylenpolyoxyethylendiole und Polyoxypropylenpolyoxyethylentriole.

Weiterhin geeignet sind Styrol-Acrylnitril gepfropfte Polyetherpolyole, wie sie beispielsweise unter dem Handelsnamen Lupranol^{®} kommerziell erhältlich sind von der Firma Elastogran GmbH, Deutschland.

Als Polyesterpolyole sind insbesondere Polyester geeignet, welche mindestens zwei Hydroxylgruppen tragen und nach bekannten Verfahren, insbesondere der Polykondensation von Hydroxycarbonsäuren oder der Polykondensation von aliphatischen und/oder aromatischen Polycarbonsäuren mit zwei- oder mehrwertigen Alkoholen, hergestellt werden.

Insbesondere geeignet sind Polyesterpolyole, welche hergestellt sind aus zwei- bis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydriden oder Estern wie beispielsweise Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophthalsäure, Trimellithsäure und Trimellithsäureanhydrid oder Mischungen der vorgenannten Säuren, sowie Polyesterpolyole aus Lactonen wie beispielsweise ε-Caprolacton.

Besonders geeignet sind Polyesterdiole, insbesondere solche, die hergestellt sind aus Adipinsäure, Azelainsäure, Sebacinsäure, Dodecandicarbonsäure, Dimerfettsäure, Phthalsäure, Isophthalsäure und Terephthalsäure als Dicarbonsäure oder aus Lactonen wie beispielsweise ε-Caprolacton und aus Ethylenglykol, Diethylenglykol, Neopentylglykol, 1,4-Butandiol, 1,6-Hexandiol, Dimerfettsäurediol und 1,4-Cyclohexandimethanol als zweiwertigem Alkohol.

Als Polyetherpolyesterpolyol eignen sich insbesondere Co-Polymere von vorhergehend genannten Polyetherpolyolen und Polyesterpolyolen.

Bevorzugt weist der polymere Alkohol **PA** in einem erfindungsgemässen Verfahren ein Molekulargewicht von 400 bis 8'000 g/mol, insbesondere von 400 bis 6'000 g/mol, bevorzugt von 400 bis 4'000 g/mol, auf.

Weiterhin bevorzugt weist der polymere Alkohol **PA** eine OH-Zahl von 7 bis 560 mg KOH/g, insbesondere von 14 bis 280 mg KOH/g, bevorzugt von 28 bis 280 mg KOH/g, auf.

Die Umsetzung der n Hydroxylgruppen des polymeren Alkohols **PA** in mit einer Verbindung der Formel (II) findet in Gegenwart eines Säurekatalysators statt. Ein geeigneter Säurekatalysator ist insbesondere ausgewählt aus der Gruppe bestehend aus Salzsäure, Schwefelsäure, Methansulfonsäure, Benzolsulfonsäure, p-Toluensulfonsäure und 4-Dodecylbenzolsulfonsäure.

Meist bevorzugt ist der Säurekatalysator Methansulfonsäure.

Es kann vorteilhaft sein, den Säurekatalysator nach erfolgter Umsetzung aus dem Reaktionsprodukt zu entfernen, beispielsweise durch Ausfällung und Filtration.

Die Umsetzung wird bevorzugt ohne die Verwendung eines Lösemittels durchgeführt.

In einem weiteren Aspekt betrifft die Erfindung die Verwendung einer Verbindung, welche erhalten wird aus einem vorhergehend beschriebenen Verfahren, als Weichmacher für feuchtigkeitshärtende Zusammensetzungen, insbesondere für feuchtigkeitshärtende Kleb- oder Dichtstoffe.

Für die beschriebene Verwendung als Weichmacher eignen sich bevorzugt Verbindungen der Formel (I), bei welchen der polymere Alkohol **PA** ein Polyetheralkohol, meist bevorzugt ein Polyetherpolyol, ist. Geeignete Polyetherpolyole sind bereits vorhergehend beschrieben worden.

Feuchtigkeitshärtende Zusammensetzungen weisen typischerweise eine hohe Viskosität auf und müssen zur weiteren Verarbeitung und für eine einfache Handhabung verdünnt werden. Die dafür üblicherweise eingesetzten Weichmacher, insbesondere Phthalsäurediester, beeinträchtigen oft die Anwendbarkeit der Zusammensetzung im Tieftemperaturbereich, insbesondere im Temperaturbereich von unter 10 °C. Weiterhin haben herkömmliche Weichmacher oft die Eigenschaft, durch Migration und Verdampfung im Verlauf der Zeit aus der ausgehärteten Zusammensetzung auszutreten. Neben ästhetischen Beeinträchtigungen der Oberfläche der ausgehärteten Zusammensetzung und ökologischen sowie toxikologischen Bedenken führt der durch Verflüchtigung einhergehende Verlust an Weichmacher innerhalb der ausgehärteten Zusammensetzung auch dazu, dass diese einen erheblichen Volumenschwund aufweisen kann. Weiterhin kann die Migration und Verdampfung des Weichmachers vor allem bei Verklebungen und Abdichtungen zu einem minderwertigen Haftverbund oder gar zur Ablösung des Klebstoffs oder Dichtstoffs vom Substrat führen.

Durch den Einsatz von Verbindungen der Formel (I), welche erhalten werden aus einem vorhergehend beschriebenen Verfahren, als Weichmacher in feuchtigkeitshärtenden Zusammensetzungen kann der Volumenschwund erheblich verringert werden, was das Einsatzgebiet derartiger Zusammensetzungen vergrössert und gleichzeitig zu einer Verbesserung der Qualität der Haftverbunde führt.

In einem weiteren Aspekt betrifft die Erfindung die Verwendung einer Verbindung, welche erhältlich ist aus einem vorhergehend beschriebenen Verfahren, als Schmelzkomponente in Warm- oder Heissschmelzklebstoffen. Insbesondere ist der Warm- oder Heissschmelzklebstoff ein einkomponentiger, reaktiver Polyurethanwarm- oder Polyurethanheissschmelzklebstoff.

In Abhängigkeit der Schmelztemperatur dieser bei Raumtemperatur festen Schmelzkomponenten wird die Zusammensetzung typischerweise als Warmschmelzklebstoff (Warm Melt), d. h. bei einer Temperatur von 40 °C bis 80 °C, bzw. als Heissschmelzklebstoff (Hot Melt), d.h. bei einer Temperatur > 80 °C, insbesondere von ≥ 100 °C eingesetzt. In beiden Fällen liegt die Applikationstemperatur oberhalb des Schmelzpunkts der genannten festen Schmelzkomponente. Dadurch erfolgt die Aushärtung der Zusammensetzung durch zwei Vorgänge. Einerseits verfestigt sich die Zusammensetzung beim Abkühlen, indem die geschmolzene Schmelzkomponente erstarrt, insbesondere durch Kristallisation, und sich dadurch die Viskosität der Zusammensetzung stark erhöht. Parallel dazu und/oder anschliessend daran erfolgt die chemische Aushärtung der Zusammensetzung mittels Feuchtigkeit, verbunden mit der Ausbildung der Endfestigkeit.

Für die beschriebene Verwendung als Schmelzkomponente eignen sich bevorzugt Verbindungen der Formel (I), bei denen der polymere Alkohol **PA** ein Polyesteralkohol, meist bevorzugt ein Polyesterpolyol, ist. Geeignete Polyesterpolyole sind bereits vorhergehend beschrieben worden.

In dieser Verwendung als Schmelzkomponente weist die Verbindung der Formel (I) vorzugsweise ein Molekulargewicht von 400 bis 6'000 g/mol, insbesondere von 800 bis 5'000 g/mol, bevorzugt von 1'000 bis 4'500 g/mol, auf.

In einem weiteren Aspekt betrifft die Erfindung die Verwendung einer Verbindung, welche erhalten wird aus einem vorhergehend beschriebenen Verfahren, als Thixotropierungsmittel für feuchtigkeitshärtende Kleb- und Dichtstoffe.

Für die beschriebene Verwendung als Thixotropierungsmittel eignen sich bevorzugt Verbindungen der Formel (I), bei denen der polymere Alkohol **PA** ein Polyesteralkohol, meist bevorzugt ein Polyesterpolyol, ist. Geeignete Polyesterpolyole sind bereits vorhergehend beschrieben worden.

In dieser Verwendung als Thixotropierungsmittel weist die Verbindung der Formel (I) vorzugsweise ein Molekulargewicht von 400 bis 6'000 g/mol, insbesondere von 800 bis 5'000 g/mol, bevorzugt von 1'000 bis 4'500 g/mol, auf.

Die feuchtigkeitshärtenden Kleb- und Dichtstoffe und auch die Warm-oder Heissschmelzklebstoffe, in denen die Verwendung einer Verbindung der Formel (I), welche erhalten wird aus einem vorhergehend beschriebenen Verfahren, besonders geeignet ist, basieren insbesondere auf Zusammensetzungen umfassend Polymere, welche als feuchtigkeitsreaktive Gruppen Isocyanat- und/oder Silangruppen aufweisen.

Als Zusammensetzungen umfassend Isocyanatgruppen aufweisende Polymere eignen sich insbesondere Zusammensetzung enthaltend mindestens ein Isocyanatgruppen aufweisendes Polyurethanpolymer **P**, welches typischerweise aus mindestens einem Polyisocyanat und mindestens einem Polyol hergestellt wird. Diese Umsetzung kann dadurch erfolgen, dass das Polyol und das Polyisocyanat mit üblichen Verfahren, beispielsweise bei Temperaturen von 50 °C bis 100 °C, gegebenenfalls unter Mitverwendung geeigneter Katalysatoren, zur Reaktion gebracht werden, wobei das Polyisocyanat so dosiert ist, dass dessen Isocyanatgruppen im Verhältnis zu den Hydroxylgruppen des Polyols im stöchiometrischen Überschuss vorhanden sind. Vorteilhaft ist das Polyisocyanat so dosiert, dass ein NCO/OH-Verhältnis von 1.5 bis 5, insbesondere eines von 1.8 bis 3, eingehalten wird. Unter dem NCO/OH-Verhältnis wird hierbei das Verhältnis der Anzahl der eingesetzten Isocyanatgruppen zu der Anzahl der eingesetzten Hydroxylgruppen verstanden. Bevorzugt verbleibt im Polyurethanpolymer **P** nach der Umsetzung aller Hydroxylgruppen des Polyols ein Gehalt an freien Isocyanatgruppen von 0.5 bis 15 Gew.-%, besonders bevorzugt von 1.0 bis 10 Gew.-%.

Als Polyisocyanate für die Herstellung des Polyurethanpolymers **P** können handelsübliche aliphatische, cycloaliphatische oder aromatische Polyisocyanate, insbesondere Diisocyanate, verwendet werden.

Beispielsweise sind das Diisocyanate, deren Isocyanatgruppen an jeweils ein aliphatisches, cycloaliphatisches oder arylaliphatisches C-Atom gebunden sind, auch "aliphatische Diisocyanate" genannt, wie 1,6-Hexamethylendiisocyanat (HDI), 2-Methylpentamethylen-1,5-diisocyanat, 2,2,4- und 2,4,4-Trimethyl-1,6-hexamethylendiisocyanat (TMDI), 1,12-Dodecamethylendiisocyanat, Lysin- und Lysinesterdiisocyanat, Cyclohexan-1,3-diisocyanat, Cyclohexan-1,4-diisocyanat, 1-Isocyanato-3,3,5-trimethyl-5-isocyanatomethylcyclohexan (= Isophorondiisocyanat oder IPDI), Perhydro-2,4'-diphenylmethandiisocyanat und Perhydro-4,4'-diphenylmethandiisocyanat, 1,4-Diisocyanato-2,2,6-trimethylcyclohexan (TMCDI), 1,3- und 1,4-Bis-(isocyanatomethyl)-cyclohexan, m- und p-Xylylendiisocyanat (m- und p-XDI), m- und p-Tetramethyl-1,3-xylylendiisocyanat, m- und p-Tetramethyl-1,4-xylylendiisocyanat, Bis-(1-Isocyanato-1-methylethyl)-naphthalin; sowie Diisocyanate mit an jeweils ein aromatisches C-Atom gebundenen Isocyanatgruppen, auch "aromatische Diisocyanate" genannt, wie 2,4- und 2,6-Toluylendiisocyanat (TDI), 4,4'-, 2,4'-und 2,2'-Diphenylmethandiisocyanat (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI); Oligomere und Polymere der vorgenannten Isocyanate, sowie beliebige Mischungen der vorgenannten Isocyanate.

Geeignete Polyole für die Herstellung des Polyurethanpolymers **P** sind insbesondere Polyetheralkohole, Polyesteralkohole oder Polyetherpolyesteralkohole, bevorzugt Polyetherpolyole, Polyesterpolyole oder Polyetherpolyesterpolyole, wie sie bereits vorhergehend beschrieben worden sind.

Weitere geeignete Polyole für die Herstellung des Polyurethanpolymers **P** sind Polycarbonatpolyole, insbesondere jene, wie sie durch Umsetzung beispielsweise der oben genannten, zum Aufbau der Polyesterpolyole eingesetzten, Alkohole mit Dialkylcarbonaten wie Dimethylcarbonat, Diarylcarbonaten wie Diphenylcarbonat oder Phosgen zugänglich sind. Besonders geeignet sind Polycarbonatdiole, insbesondere amorphe Polycarbonatdiole.

Weitere geeignete Polyole sind Poly(meth)acrylatpolyole.

Weiterhin geeignet sind polyhydroxyfunktionelle Fette und Öle, beispielsweise natürliche Fette und Öle, insbesondere Ricinusöl, oder durch chemische Modifizierung von natürlichen Fetten und Ölen gewonnene, so genannte oleochemische, Polyole, die beispielsweise durch Epoxidierung ungesättigter Öle und anschliessender Ringöffnung mit Carbonsäuren bzw. Alkoholen erhaltenen Epoxypolyester bzw. Epoxypolyether, oder durch Hydroformylierung und Hydrierung ungesättigter Öle erhaltene Polyole. Weiterhin geeignet sind Polyole, welche aus natürlichen Fetten und Ölen durch Abbauprozesse wie Alkoholyse oder Ozonolyse und anschliessender chemischer Verknüpfung, beispielsweise durch Umesterung oder Dimerisierung, der so gewonnenen Abbauprodukte oder Derivate davon, erhalten werden. Geeignete Abbauprodukte von natürlichen Fetten und Ölen sind insbesondere Fettsäuren und Fettalkohole sowie Fettsäureester, insbesondere die Methylester (FAME), welche beispielsweise durch Hydroformylierung und Hydrierung zu Hydroxyfettsäureestern derivatisiert werden können.

Weiterhin geeignet sind Polykohlenwasserstoffpolyole, auch Oligohydrocarbonole genannt, beispielsweise polyhydroxyfunktionelle Ethylen-Propylen-, Ethylen-Butylen- oder Ethylen-Propylen-Dien-Copolymere, wie sie beispielsweise von der Firma Kraton Polymers, USA, hergestellt werden, oder polyhydroxyfunktionelle Copolymere aus Dienen wie 1,3-Butandien oder Diengemischen und Vinylmonomeren wie Styrol, Acrylnitril oder Isobutylen, oder polyhydroxyfunktionelle Polybutadienpolyole, beispielsweise solche, die durch Copolymerisation von 1,3-Butadien und Allylalkohol hergestellt werden und auch hydriert sein können.

Weiterhin geeignet sind polyhydroxyfunktionelle Acrylnitril/Butadien-Copolymere, wie sie beispielsweise aus Epoxiden oder Aminoalkoholen und carboxylterminierten Acrylnitril/Butadien-Copolymeren, welche kommerziell erhältlich sind unter dem Namen Hypro^{®} (früher Hycar^{®}) CTBN von der Firma Emerald Performance Materials, LLC, USA, hergestellt werden können.

Derartige geeignete Zusammensetzungen umfassend Isocyanatgruppen aufweisende Polymere können neben dem Isocyanatgruppen aufweisenden Polyurethanpolymer **P** weitere Bestandteile aufweisen, wie sie beispielsweise beschrieben sind in der US-Patentanmeldung mit der Anmeldenummer Appl. No.: 11/992,130, veröffentlicht als WO 2007/036574 A1, deren gesamte Offenbarung hiermit durch Bezugnahme eingeschlossen wird.

Als Zusammensetzungen umfassend Silangruppen aufweisende Polymere eignen sich insbesondere Zusammensetzung enthaltend mindestens ein silanfunktionelles Polymer **PS**.

In einer ersten Ausführungsform ist das silanfunktionelle Polymer **PS** ein silanfunktionelles Polyurethanpolymer **P1**, welches erhältlich ist durch die Umsetzung eines Silans, welches mindestens eine gegenüber Isocyanatgruppen reaktive Gruppe aufweist, mit einem Polyurethanpolymer, welches Isocyanatgruppen aufweist. Diese Umsetzung wird bevorzugt in einem stöchiometrischen Verhältnis der gegenüber Isocyanatgruppen reaktiven Gruppen zu den Isocyanatgruppen von 1:1 oder mit einem leichten Überschuss an gegenüber Isocyanatgruppen reaktiven Gruppen durchgeführt, so dass das resultierende silanfunktionelle Polyurethanpolymer **P1** gänzlich frei von Isocyanatgruppen ist.

In der Umsetzung des Silans, welches mindestens eine gegenüber Isocyanatgruppen reaktive Gruppe aufweist, mit einem Polyurethanpolymer, welches Isocyanatgruppen aufweist, kann das Silan prinzipiell, wenn auch nicht bevorzugt, unterstöchiometrisch eingesetzt werden, so dass ein silanfunktionelles Polymer erhalten wird, welches sowohl Silangruppen als auch Isocyanatgruppen aufweist.

Das Silan, welches mindestens eine gegenüber Isocyanatgruppen reaktive Gruppe aufweist, ist beispielsweise ein Mercaptosilan oder ein Aminosilan, insbesondere ein Aminosilan.

Bevorzugt ist das Aminosilan ein Aminosilan **AS** der Formel (III),

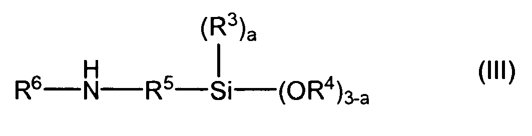

Dabei steht der Rest R³ für einen linearen oder verzweigten, einwertigen Kohlenwasserstoffrest mit 1 bis 8 C-Atomen, insbesondere für eine Methyl- oder für eine Ethylgruppe.

Der Rest R⁴ steht für einen Acylrest oder für einen linearen oder verzweigten, einwertigen Kohlenwasserstoffrest mit 1 bis 5 C-Atomen, insbesondere für eine Methyl- oder für eine Ethyl- oder für eine Isopropylgruppe.

Der Rest R⁵ steht für einen linearen oder verzweigten, zweiwertigen Kohlenwasserstoffrest mit 1 bis 12 C-Atomen, welcher gegebenenfalls cyclische und/oder aromatische Anteile, und gegebenenfalls ein oder mehrere Heteroatome, insbesondere ein oder mehrere Stickstoffatome, aufweist.

Der Index a steht für einen Wert von 0 oder 1 oder 2, insbesondere für einen Wert von 0.

Der Rest R⁶ steht für ein Wasserstoffatom oder für einen linearen oder verzweigten, einwertigen Kohlenwasserstoffrest mit 1 bis 20 C-Atomen, welcher gegebenenfalls cyclische Anteile aufweist, oder für einen Rest der Formel (IV).

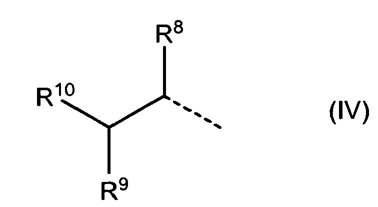

Dabei stehen die Reste R⁸ und R⁹ jeweils unabhängig voneinander für ein Wasserstoffatom oder für einen Rest, welcher ausgewählt ist aus der Gruppe bestehend aus -R¹¹, -COOR¹¹ und -CN.

Der Rest R¹⁰ steht für ein Wasserstoffatom oder für einen Rest, welcher ausgewählt ist aus der Gruppe bestehend aus -CH₂-COOR¹¹, -COOR¹¹, -CONHR¹¹, -CON(R¹¹)₂, -CN, -NO₂, -PO(OR¹¹)₂, -SO₂R¹¹ und -SO₂OR¹¹.

Der Rest R¹¹ steht für einen, gegebenenfalls mindestens ein Heteroatom aufweisenden, Kohlenwasserstoffrest mit 1 bis 20 C-Atomen.

Beispiele für geeignete Aminosilane **AS** sind primäre Aminosilane wie 3-Aminopropyltrimethoxysilan, 3-Aminopropyldimethoxymethylsilan; sekundäre Aminosilane wie N-Butyl-3-aminopropyltrimethoxysilan, N-Phenyl-3-aminopropyltrimethoxysilan, N-Ethyl-3-amino-2-methyl-propyltrimethoxysilan, N-Phenyl-aminomethyl-trimethoxysilan N-Phenyl-aminomethyl-dimethoxymethylsilan, N-Cyclohexyl-aminomethyl-trimethoxysilan N-Cyclohexyl-aminomethyldimethoxymethylsilan; die Produkte aus der Michael-artigen Addition von primären Aminosilanen wie 3-Aminopropyltrimethoxysilan oder 3-Aminopropyldimethoxymethylsilan an Michael-Akzeptoren wie Acrylnitril, Acryl- und Methacrylsäureestern, Acryl- oder Methacrylsäureamiden, Maleinsäure- und Fumarsäurediestern, Citraconsäurediestern und Itaconsäurediestern, beispielsweise N-(3-Trimethoxysilyl-propyl)-amino-bernsteinsäuredimethyl- und -diethylester; sowie Analoga der genannten Aminosilane mit Ethoxy- oder Isopropoxygruppen anstelle der Methoxygruppen am Silicium. Als Aminosilane **AS** besonders geeignet sind sekundäre Aminosilane, insbesondere Aminosilane **AS**, bei denen R⁶ in Formel (III) verschieden von H ist. Bevorzugt sind die Michael-artigen Addukte, insbesondere N-(3-Trimethoxysilyl-propyl)-amino-bernstein-säurediethylester.

Innerhalb einer Silangruppe in der Verbindung der Formel (III) stehen R³ und R⁴ jeweils unabhängig voneinander für die beschriebenen Reste. So sind beispielsweise auch Verbindungen mit Endgruppen der Formel (III) möglich, welche Ethoxydimethoxysilan-Endgruppen (R⁴ = Methyl, R⁴ = Methyl, R⁴ = Ethyl) sind.

Der Begriff "Michael-Akzeptor" bezeichnet im vorliegenden Dokument Verbindungen, welche aufgrund der in ihnen enthaltenen, durch Elektronenakzeptor-Reste aktivierten Doppelbindungen befähigt sind, mit primären Aminogruppen (NH₂-Gruppen) in einer der Michael-Addition analogen Weise nucleophile Additionsreaktionen einzugehen (Hetero-Michael-Addition).

Als Isocyanatgruppen aufweisendes Polyurethanpolymer zur Herstellung eines silanfunktionellen Polyurethanpolymers **P1** eignen sich beispielsweise Polyurethanpolymere **P**, welche bereits vorhergehend beschrieben worden sind.

Beispielsweise sind geeignete silanfunktionelle Polymere **P1** kommerziell erhältlich unter den Handelsnamen Polymer ST, beispielsweise Polymer ST50, von der Firma Hanse Chemie AG, Deutschland, sowie unter dem Handelsnamen Desmoseal^{®} von der Firma Bayer MaterialScience AG, Deutschland.

Das silanfunktionelle Polymer **P** ist in einer zweiten Ausführungsform ein silanfunktionelles Polyurethanpolymer **P2**, erhältlich durch die Umsetzung eines Isocyanatosilans **IS** mit einem Polymer, welches gegenüber Isocyanatgruppen reaktive funktionelle Endgruppen, insbesondere Hydroxylgruppen, Mercaptogruppen und/oder Aminogruppen, aufweist. Diese Umsetzung erfolgt im stöchiometrischen Verhältnis der Isocyanatgruppen zu den gegenüber Isocyanatgruppen reaktiven funktionellen Endgruppen von 1:1, oder mit leichtem Überschuss der gegenüber Isocyanatgruppen reaktiven funktionellen Endgruppen, beispielsweise bei Temperaturen von 20 °C bis 100 °C, gegebenenfalls unter Mitverwendung von Katalysatoren.

Als Isocyanatosilan **IS** geeignet sind Verbindungen der Formel (V). 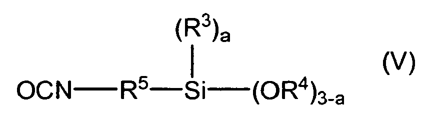 wobei R³, R⁴, R⁵ und a bereits vorhergehend beschrieben worden sind.

Beispiele für geeignete Isocyanatosilane IS der Formel (V) sind Isocyanatomethyltrimethoxysilan, Isocyanatomethyldimethoxymethylsilan 3-Isocyanatopropyltrimethoxysilan, 3-Isocyanatopropyldimethoxymethylsilan, und deren Analoga mit Ethoxy- oder Isopropoxygruppen anstelle der Methoxygruppen am Silicium.

Bevorzugt weist das Polymer als gegenüber Isocyanatgruppen reaktive funktionelle Endgruppen Hydroxylgruppen auf.

Als Hydroxylgruppen aufweisende Polymere eignen sich einerseits bereits genannte hochmolekulare Polyoxyalkylenpolyole, bevorzugt Polyoxypropylendiole mit einem Ungesättigtheitsgrad tiefer als 0.02 mEq/g und mit einem Molekulargewicht im Bereich von 4'000 bis 30'000 g/mol, insbesondere solche mit einem Molekulargewicht im Bereich von 8'000 bis 30'000 g/mol.

Andererseits eignen sich auch Hydroxylgruppen aufweisende, insbesondere Hydroxylgruppen terminierte, Polyurethanpolymere zur Umsetzung mit Isocyanatosilanen **IS** der Formel (V). Solche Polyurethanpolymere sind erhältlich durch die Umsetzung von mindestens einem Polyisocyanat mit mindestens einem Polyol. Diese Umsetzung kann dadurch erfolgen, dass das Polyol und das Polyisocyanat mit üblichen Verfahren, beispielsweise bei Temperaturen von 50 °C bis 100 °C, gegebenenfalls unter Mitverwendung geeigneter Katalysatoren, zur Reaktion gebracht werden, wobei das Polyol so dosiert ist, dass dessen Hydroxylgruppen im Verhältnis zu den Isocyanatgruppen des Polyisocyanates im stöchiometrischen Überschuss vorhanden sind. Bevorzugt ist ein Verhältnis von Hydroxylgruppen zu Isocyanatgruppen von 1.3:1 bis 4:1, insbesondere von 1.8:1 bis 3:1.

Für diese Umsetzung geeignet sind dieselben Polyole und Polyisocyanate, die bereits als geeignet zur Herstellung eines Isocyanatgruppen aufweisenden Polyurethanpolymers **P** erwähnt wurden, welches zur Herstellung eines silanfunktionellen Polyurethanpolymers **P1** verwendet wird.

Beispielsweise sind geeignete silanfunktionelle Polymere **P2** kommerziell erhältlich unter den Handelsnamen SPUR+^{®} 1010LM, 1015LM und 1050MM von der Firma Momentive Performance Materials Inc., USA, sowie unter den Handelsnamen Geniosil^{®} STP-E15, STP-E10, STP-E35 und STP-E30 von der Firma Wacker Chemie AG, Deutschland.

In einer dritten Ausführungsform ist das silanfunktionelle Polymer **P** ein silanfunktionelles Polymer **P3,** welches erhältlich ist durch eine Hydrosilylierungsreaktion von Polymeren mit endständigen Doppelbindungen, beispielsweise Poly(meth)acrylatpolymere oder Polyetherpolymere, insbesondere von allylterminierten Polyoxyalkylenpolymeren, beschrieben beispielsweise in US 3,971,751 und US 6,207,766, deren Offenbarung hiermit eingeschlossen ist.

Beispielsweise sind geeignete silanfunktionelle Polymere **P3** kommerziell erhältlich unter den Handelsnamen MS-Polymer^{®} S203(H), S303(H), S227, S810, MA903 und S943, Silyl^{®} SAX220, SAX350, SAX400 und SAX725, Silyl^{®} SAT350 und SAT400, sowie XMAP^{®} SA100S und SA310S von der Firma Kaneka Corp., Japan, sowie unter den Handelsnamen Excestar^{®} S241 0, S2420, S3430, S3630, W2450 und MSX931 von der Firma Asahi Glass Co, Ltd., Japan.

Als Zusammensetzungen umfassend Silangruppen aufweisende Polymere eignen sich insbesondere solche, wie sie als feuchtigkeitshärtende Zusammensetzungen der US-Patentanmeldung PCT/EP2007/054085, veröffentlicht als WO 2007/122261 A1, beschrieben sind, deren gesamte Offenbarung hiermit durch Bezugnahme eingeschlossen wird.

Besonders geeignete Zusammensetzungen umfassend Isocyanatgruppen und/oder Silangruppen aufweisende Polymere sind beispielsweise unter dem Handelsnamen Sikaflex^{®} kommerziell erhältlich von Sika Schweiz AG.

### Beispiele

### Beschreibung der Messmethoden

Die **Zugfestigkeit,** die **Bruchdehnung,** und der **E-Modul** wurden nach DIN EN ISO 527 (Zuggeschwindigkeit: 200 mm/min) an während 14 Tagen bei 23 °C (Raumtemperatur, "RT") und 50% relativer Luftfeuchtigkeit ausgehärteten Filmen mit einer Schichtdicke von 2 mm bestimmt.

Der **Weiterreisswiderstand** wurde bestimmt nach DIN ISO 34-1.

Die **Zugscherfestigkeit** wurde in Anlehnung an ISO 4587/DIN EN 1465 auf einer Zugmaschine Zwick/Roell Z005 bestimmt, wobei jeweils zwei gleiche Substrate miteinander verklebt wurden (Klebefläche: 12x25 mm; Schichtdicke: 4.0 mm; Messgeschwindigkeit: 10 mm/min; Substrate: Floatglas, PVC und Aluminium; Temperatur: 23°C (falls nicht anders genannt)).

Der **Schubmodul** wurde bestimmt nach DIN 53283.

Die Shore **A-Härte** wurde bestimmt nach DIN 53505.

Die **Hautbildungszeit** (Zeit bis zur Klebefreiheit, "tack-free time") als Mass für die Aushärtegeschwindigkeit wurde bei 23 °C ("RT") und 50 % relativer Luftfeuchtigkeit bestimmt. Zur Bestimmung der Hautbildungszeit wurde ein kleiner Teil der raumtemperaturwarmen Beschichtungsmasse in einer Schichtdicke von ca. 2 mm auf Pappkarton aufgetragen und die Zeit bestimmt, die es dauerte, bis beim leichten Antippen der Oberfläche der Beschichtungsmasse mittels einer Pipette aus LDPE erstmals keine Rückstände auf der Pipette mehr zurückblieben.

Für die Bestimmung der **Auspresskraft** wurden die Zusammensetzungen in innenlackierte Aluminiumkartuschen gefüllt und während der in Tabelle 1 angegebenen Zeit und Temperatur gelagert. Nach einer Konditionierung von 12 Stunden bei 23 °C wurden die Kartuschen geöffnet und mittels Auspressgerät ausgepresst. Dafür wurde eine Düse mit 5 mm Innendurchmesser auf die Kartusche aufgeschraubt. Mit einem Auspressgerät (Zwick/Roell Z005) wurde die Kraft bestimmt, die benötigt wurde, um die Zusammensetzung mit einer Auspressgeschwindigkeit von 60 mm/min auszupressen. Der angegebene Wert ist ein Mittelwert aus den Kräften, die nach einem Auspressweg von 22 mm, 24 mm, 26 mm und 28 mm gemessen wurde. Nach 30 mm Auspressweg wurde die Messung gestoppt.

Zur Bestimmung der **Durchhärtung** wurde die Zusammensetzung in eine Teflonform mit keilförmiger Aussparung appliziert und mittels Holzspatel abgestrichen. Nach 24 Stunden bei 23 °C und 50% relativer Luftfeuchtigkeit wird vom dünnen Ende des Keiles her die nun vernetzte Zusammensetzung von der Teflon^{®}-Form sorgfältig abgehoben, bis zu der Stelle (d.h. Dicke), an welcher auf der geneigten Keilaussparungsfläche unausgehärtete Zusammensetzung gefunden wird. Aufgrund der Abmessungen kann so die Aushärtungsschichtdicke als Mass für die Durchhärtungsgeschwindigkeit ermittelt werden.

Die **Viskosität** wurde auf einem thermostatisierten Kegel-Platten-Viskosimeter Physica UM (Kegeldurchmesser 20 mm, Kegelwinkel 1°, Kegelspitze-Platten-Abstand 0.05 mm, Schergeschwindigkeit 10 bis 1000 s⁻¹) gemessen.

### Herstellung des Polymers PP1

1300 g Polyoxypropylendiol (Acclaim^{®} 4200 N, Bayer MaterialScience AG; OH-Zahl 28.5 mg KOH/g), 2600 g Polyoxypropylenpolyoxyethylentriol (Caradol^{®} MD34-02, Shell Chemicals Ltd., UK; OH-Zahl 35.0 mg KOH/g), 600 g 4,4'-Methylendiphenyldiisocyanat (4,4'-MDI; Desmodur^{®} 44 MC L, Bayer MaterialScience AG) und 500 g Diisodecylphthalat (DIDP; Palatinol^{®} Z, BASF SE, Deutschland) wurden nach bekanntem Verfahren bei 80 °C zu einem NCO-terminierten Polyurethanpolymeren mit einem Gehalt an freien Isocyanatgruppen von 2.05 Gew.-% umgesetzt.

### Herstellung des Polymers PP2

590 g Polyoxypropylendiol (Acclaim^{®} 4200 N, Bayer MaterialScience AG; OH-Zahl 28.5 mg KOH/g), 1180 g Polyoxypropylenpolyoxyethylentriol (Caradol^{®} MD34-02, Shell Chemicals Ltd., UK; OH-Zahl 35.0 mg KOH/g) und 230 g Isophorondiisocyanat (IPDI; Vestanat^{®} IPDI, Evonik Degussa AG) wurden nach bekanntem Verfahren bei 80 °C zu einem NCO-terminierten Polyurethanpolymeren mit einem Gehalt an freien Isocyanatgruppen von 2.1 Gew.-% umgesetzt.

### Herstellung des Weichmachers W1

In einem Kolben wurden 58.9 Gewichtsteile eines Polypropylenetherpolyols (Desmophen^{®} 1262 BD, Bayer MaterialScience AG; OH-Zahl 260 mg KOH/g), vorgelegt, mittels 0.03 Gewichtsteile Methansulfonsäure angesäuert und anschliessend auf eine Temperatur von 120 °C erhitzt. Unter Stickstoffatmosphäre wurden 27.3 Gewichtsteile Isopropenylacetat (Acetonenolacetat, Sigma-Aldrich Chemie GmbH, Schweiz) zugetropft (ca. 2 Tropfen/Sekunde). Das Aceton, welches bei der Reaktion gebildet wurde, wurde abdestilliert. Nach einer Reaktionsdauer von 3 Stunden wurde die zugegebene Methansulfonsäure mit 2,2'-Dimorpholindiethylether (DMDEE) neutralisiert und das aus der Neutralisation der Säure gebildete Salz abfiltriert.

Der hergestellte Weichmacher ***W1*** war geruchsfrei und wies eine OH-Zahl von 0 bis 2 mg KOH/g und eine Viskosität bei 20 °C von 98 mPa·s auf.

### Herstellung der Klebstoffe 1 und Ref

In einem Vakuummischer wurden entsprechend den in Tabelle 1 angegebenen Gewichtsteilen das Polymer ***PP1,*** der Weichmacher ***W1*** (Beispiel ***1***) bzw. DIDP (Vergleichsbeispiel ***Ref*)** und das CAB-O-SIL^{®} TS-720 während 5 Minuten gut vermischt. Anschliessend wurde der Füllstoff zugegeben und während 15 Minuten bei 60 °C eingemischt. Bei ausgeschalteter Heizung wurde anschliessend der Katalysator zugegeben und die Mischung unter Vakuum während 10 Minuten zu einer homogenen Paste verarbeitet. Diese wurde dann in innenlackierte Aluminium-Spreizkolbenkartuschen abgefüllt.

### Herstellung der Schmelzkomponente S1

In einem Kolben wurden 86 Gewichtsteile Polyester (Dynacoll^{®} 7360, Evonik Degussa AG, Deutschland; OH-Zahl 30 mg KOH/g) bei einer Temperatur von 80 °C aufgeschmolzen, mittels 0.02 Gewichtsteilen Methansulfonsäure angesäuert und anschliessend auf eine Temperatur von 95 °C erhitzt. Unter Stickstoffatmosphäre wurde 13.8 Gewichtsteile Isopropenylacetat (Acetonenolacetat, Sigma-Aldrich Chemie GmbH, Schweiz) zugetropft (ca. 2 Tropfen/Sekunde). Das Aceton, welches bei der Reaktion gebildet wurde, wurde abdestilliert. Nach einer Reaktionsdauer von 3 Stunden wurde die zugegebene Methansulfonsäure mit 2,2'-Dimorpholindiethylether (DMDEE) neutralisiert. Das überschüssige Isopropenylacetat wurde während 30 Minuten bei 120°C abdestilliert. Schliesslich wurde das aus der Neutralisation der Säure gebildete Salz abfiltriert.

Die hergestellte Schmelzkomponente ***S1*** war bei Raumtemperatur fest und verflüssigte sich bei Erwärmung auf 60 °C.

### Herstellung des Warmschmelzklebstoffs 2

In einem Vakuummischer wurden entsprechend den in Tabelle 1 angegebenen Gewichtsteilen die Polymere ***PP1*** und ***PP2***, die Schmelzkomponente ***S1*** und das Diisodecylphthalat während 5 Minuten gut vermischt. Anschliessend wurde der Füllstoff zugegeben und während 15 Minuten bei 60 °C mitgeknetet. Bei ausgeschalteter Heizung wurde anschliessend der Katalysator zugegeben und unter Vakuum während 10 Minuten zu einer homogenen Paste verarbeitet. Diese wurde dann in innenlackierte Aluminium-Spreizkolbenkartuschen abgefüllt.

**Tabelle 1 Klebstoffzusammensetzungen und Resultate;**

| | | ***1*** | ***Ref*** | ***2*** |
|---|---|---|---|---|
| ***PP1*** | | 40 | 40 | 30 |
| ***PP2*** | | | | 6 |
| Diisodecylphthalat (DIDP) | | | 20 | 14 |
| Weichmacher ***W1*** | | 20 | | |
| Schmelzkomponente ***S1*** | | | | 3 |
| CAB-O-SIL^{®} TS-720 ^{a} | | 4 | 4 | |
| Trocknungsmittel (Tosylisocyanat) | | | | 0.3 |
| Russ | | 15 | 15 | 20.4 |
| Kreide | | 20 | 20 | 25 |
| DBTDL ^{b} | | 1 | 1 | |
| DBTDL ^{c} | | | | 1.3 |
| Zugfestigkeit | MPa | 8.22 | 8.74 | 4.88 |
| Bruchdehnung | % | 566 | 542 | 239 |
| Weiterreisswiderstand | MPa | 13.5 | 12.8 | 10.7 |
| Zugscherfestigkeit | MPa | 5.1 | 5.34 | |
| E-Modul 0.5 - 5% | MPa | 5.5 | 5.51 | 9.78 |
| E-Modul 5 - 25% | MPa | 3.5 | 3.76 | 5.25 |
| E-Modul 25 - 50% | MPa | 2.17 | 2.45 | 3.09 |
| E-Modul 50 - 75% | MPa | 1.72 | 2.18 | 3.02 |
| E-Modul 75 - 100% | MPa | 1.66 | 1.92 | 2.6 |
| Schubmodul | MPa | 1.89 | 1.86 | 2.69 |
| Auspresskraft nach 24h, RT | N | 1160 | 1105 | |
| Auspresskraft nach 7 Tagen, 60 °C | N | 1605 | 1386 | |
| Auspresskraft bei 5 °C | N | 1810 | 2080 | |
| Auspresskraft bei 60 °C | N | 1005 | 984 | 733 |
| Hautbildungszeit | min | 36 | 40 | 22 |
| Durchhärtung nach 1 Tag | mm | 4.6 | 3 | |
| Durchhärtung nach 2 Tagen | mm | 6.1 | 4.1 | |
| Durchhärtung nach 3 Tagen | mm | 9 | 5 | |

| | | | | |
|---|---|---|---|---|
| ^{a} erhältlich von Cabot Corp., USA; ^{b} 1 Gew.-% Dibutylzinn(IV)-dilaurat in DIDP; ^{c} 2 Gew.-% Dibutylzinn(IV)-dilaurat in DIDP. | | | | |

## Patentansprüche

1. Verfahren zur Herstellung einer Verbindung der Formel (I) 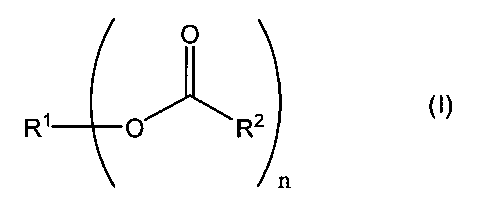 wobei der Rest R¹ für den n-wertigen Rest eines polymeren Alkohols **PA** nach Entfernung von n Hydroxylgruppen steht;
der Rest R² unabhängig voneinander für einen linearen oder verzweigten, einwertigen Kohlenwasserstoffrest mit 1 bis 20 C-Atomen steht, welcher gegebenenfalls ein oder mehrere Heteroatome, und gegebenenfalls cycloaliphatische und/oder aromatische Anteile aufweist; und
n für einen Wert von 1 bis 4 steht;
**dadurch gekennzeichnet,**
**dass** n Hydroxylgruppen des polymeren Alkohols **PA** in Gegenwart eines Säurekatalysators mit einer Verbindung der Formel (II) umgesetzt werden

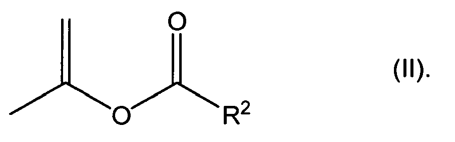

2. Verfahren gemäss Anspruch 1, **dadurch gekennzeichnet, dass** der polymere Alkohol **PA** ein polymerer Polyol, insbesondere ein Polyetherpolyol oder ein Polyesterpolyol oder ein Polyetherpolyesterpolyol ist.

3. Verfahren gemäss einem vorhergehenden Ansprüche, **dadurch gekennzeichnet, dass** n für einen Wert von 2 steht.

4. Verfahren gemäss einem vorhergehenden Ansprüche, **dadurch gekennzeichnet, dass** der Rest R² für eine Methyl- oder für eine Ethyl-oder für eine Isopropylgruppe, insbesondere für eine Methylgruppe, steht.

5. Verfahren gemäss einem vorhergehenden Ansprüche, **dadurch gekennzeichnet, dass** der polymere Alkohol **PA** ein Molekulargewicht von 400 bis 8'000 g/mol, insbesondere von 400 bis 6'000 g/mol, bevorzugt von 400 bis 4'000 g/mol, aufweist.

6. Verfahren gemäss einem vorhergehenden Ansprüche, **dadurch gekennzeichnet, dass** der Säurekatalysator, ausgewählt ist aus der Gruppe bestehend aus Salzsäure, Schwefelsäure, Methansulfonsäure, Benzolsulfonsäure, p-Toluensulfonsäure und 4-Dodecylbenzolsulfonsäure.

7. Verwendung einer Verbindung, welche erhalten wird aus einem Verfahren gemäss einem der Ansprüche 1 bis 6, als Weichmacher für feuchtigkeitshärtende Zusammensetzungen.

8. Verwendung gemäss Anspruch 7 als Weichmacher für feuchtigkeitshärtende Kleb- oder Dichtstoffe.

9. Verwendung gemäss einem der Ansprüche 7 oder 8, **dadurch gekennzeichnet, dass** der polymere Alkohol **PA** ein Polyetheralkohol ist.

10. Verwendung einer Verbindung, welche erhalten wird aus einem Verfahren gemäss einem der Ansprüche 1 bis 6, als Schmelzkomponente in Warm- oder Heissschmelzklebstoffen.

11. Verwendung gemäss Anspruch 10, **dadurch gekennzeichnet, dass** der Warm- oder Heissschmelzklebstoff ein einkomponentiger, reaktiver Polyurethanwarm- oder Polyurethanheissschmelzklebstoff ist.

12. Verwendung einer Verbindung, welche erhalten wird aus einem Verfahren gemäss einem der Ansprüche 1 bis 6, als Thixotropierungsmittel für feuchtigkeitshärtende Kleb- und Dichtstoffe.

13. Verwendung gemäss einem der Ansprüche 10 bis 12, **dadurch gekennzeichnet, dass** der polymere Alkohol **PA** ein Polyesteralkohol ist.

14. Verwendung gemäss einem der Ansprüche 10 bis 13, **dadurch gekennzeichnet, dass** die Schmelzkomponente ein Molekulargewicht von 400 bis 6'000 g/mol, insbesondere von 800 bis 5'000 g/mol, bevorzugt von 1'000 bis 4'500 g/mol, aufweist.

## Claims

1. Process for preparing a compound of the formula (I) 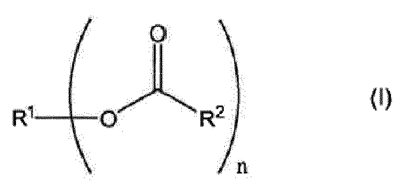 where the R¹ radical is the n-valent radical of a polymeric alcohol **PA** after removal of n hydroxyl groups;
the R² radical is independently a linear or branched, monovalent hydrocarbyl radical which has 1 to 20 carbon atoms and optionally has one or more heteroatoms, and optionally cycloaliphatic and/or aromatic moieties; and
n is a value of 1 to 4;
**characterized in that**
n hydroxyl groups of the polymeric alcohol **PA** are reacted in the presence of an acid catalyst with a compound of the formula (II)

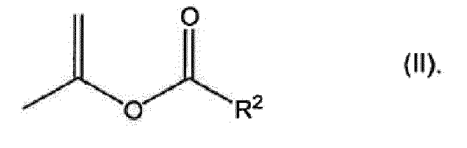

2. Process according to Claim 1, **characterized in that** the polymeric alcohol **PA** is a polymeric polyol, especially a polyether polyol or a polyester polyol or a polyether polyester polyol.

3. Process according to either of the preceding claims, **characterized in that** n is a value of 2.

4. Process according to any of the preceding claims, **characterized in that** the R² radical is a methyl or ethyl or isopropyl group, especially a methyl group.

5. Process according to any of the preceding claims, **characterized in that** the polymeric alcohol **PA** has a molecular weight of 400 to 8000 g/mol, especially of 400 to 6000 g/mol, preferably of 400 to 4000 g/mol.

6. Process according to any of the preceding claims, **characterized in that** the acid catalyst is selected from the group consisting of hydrochloric acid, sulphuric acid, methanesulphonic acid, benzenesulphonic acid, p-toluenesulphonic acid and 4-dodecylbenzenesulphonic acid.

7. Use of a compound which is obtained from a process according to any of Claims 1 to 6 as a plasticizer for moisture-curing compositions.

8. Use according to Claim 7 as a plasticizer for moisture-curing adhesives or sealants.

9. Use according to either of Claims 7 and 8, **characterized in that** the polymeric alcohol **PA** is a polyether alcohol.

10. Use of a compound which is obtained from a process according to any of Claims 1 to 6 as a meltable component in warm- or hot-melt adhesives.

11. Use according to Claim 10, **characterized in that** the warm- or hot-melt adhesive is a one-component, reactive warm- or hot-melt polyurethane adhesive.

12. Use of a compound which is obtained from a process according to any of Claims 1 to 6 as a thixotropic agent for moisture-curing adhesives and sealants.

13. Use according to any of Claims 10 to 12, **characterized in that** the polymeric alcohol **PA** is a polyester alcohol.

14. Use according to any of Claims 10 to 13, **characterized in that** the meltable component has a molecular weight of 400 to 6000 g/mol, especially of 800 to 5000 g/mol, preferably of 1000 to 4500 g/mol.

## Revendications

1. Procédé pour la préparation d'un composé de formule générale (I) 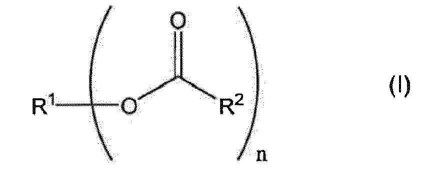 où
le radical R¹ représente un radical n-valent d'un alcool polymère **PA** après élimination de n groupes hydroxyle ;
le radical R² représente, indépendamment l'un de l'autre, un radical hydrocarboné linéaire ou ramifié, monovalent, comprenant 1 à 20 atomes de carbone, qui présente le cas échéant un ou plusieurs hétéroatomes et le cas échéant des proportions cycloaliphatiques et/ou aromatiques ; et
n représente une valeur de 1 à 4 ;
**caractérisé en ce que** n groupes hydroxyle de l'alcool polymère **PA** sont transformés en présence d'un catalyseur acide avec un composé de formule (II)

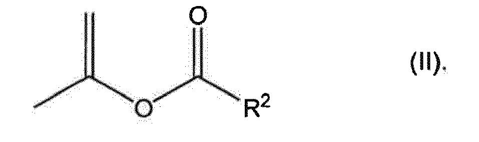

2. Procédé selon la revendication 1, **caractérisé en ce que** l'alcool polymère **PA** est un polyol polymère, en particulier un polyétherpolyol ou un polyesterpolyol ou un polyétherpolyesterpolyol.

3. Procédé selon l'une quelconque des revendications précédentes, **caractérisé en ce que** n vaut 2.

4. Procédé selon l'une quelconque des revendications précédentes, **caractérisé en ce que** le radical R² représente un groupe méthyle ou un groupe éthyle ou un groupe isopropyle, en particulier un groupe méthyle.

5. Procédé selon l'une quelconque des revendications précédentes, **caractérisé en ce que** l'alcool polymère **PA** présente un poids moléculaire de 400 à 8000 g/mole, en particulier de 400 à 6000 g/mole, de préférence de 400 à 4000 g/mole.

6. Procédé selon l'une quelconque des revendications précédentes, **caractérisé en ce que** le catalyseur acide est choisi dans le groupe constitué par l'acide chlorhydrique, sulfurique, méthanesulfonique, benzènesulfonique, p-toluènesulfonique et 4-dodécylbenzènesulfonique.

7. Utilisation d'un composé qui est obtenu par un procédé selon l'une quelconque des revendications 1 à 6, comme plastifiant pour des compositions durcissant sous l'effet de l'humidité.

8. Utilisation selon la revendication 7 comme plastifiant pour des adhésifs ou des substances d'étanchéité durcissant sous l'effet de l'humidité.

9. Utilisation selon l'une quelconque des revendications 7 ou 8, **caractérisée en ce que** l'alcool polymère PA est un polyétheralcool.

10. Utilisation d'un composé qui est obtenu par un procédé selon l'une quelconque des revendications 1 à 6, comme composant de fusion dans des adhésifs thermofusibles.

11. Utilisation selon la revendication 10, **caractérisée en ce que** l'adhésif thermofusible est un adhésif thermofusible réactif, à un composant, à base de polyuréthane.

12. Utilisation d'un composé qui est obtenu par un procédé selon l'une quelconque des revendications 1 à 6, comme agent de réglage de la thixotropie pour des adhésifs et des substances d'étanchéité durcissant sous l'effet de l'humidité.

13. Utilisation selon l'une quelconque des revendications 10 à 12, **caractérisée en ce que** l'alcool polymère PA est un polyesteralcool.

14. Utilisation selon l'une quelconque des revendications 10 à 13, **caractérisée en ce que** le composant fusible présente un poids moléculaire de 400 à 6000 g/mole, en particulier de 800 à 5000 g/mole, de préférence de 1000 à 4500 g/mole.
